Europäisches Patentamt

European Patent Office

Office européen des brevets

(11) Veröffentlichungsnummer: **0 204 857**
**B1**

(12) **EUROPÄISCHE PATENTSCHRIFT**

(45) Veröffentlichungstag der Patentschrift:
15.11.89

(21) Anmeldenummer: 85107225.6

(22) Anmeldetag: 12.06.85

(51) Int. Cl.⁴: **C 05 F 11/08**

(54) Bodenaktivierungsmittel und dessen Verwendung.

(43) Veröffentlichungstag der Anmeldung:
17.12.86 Patentblatt 86/51

(45) Bekanntmachung des Hinweises auf die Patenterteilung:
15.11.89 Patentblatt 89/46

(84) Benannte Vertragsstaaten:
AT BE CH DE FR GB IT LI LU NL SE

(56) Entgegenhaltungen:
EP-A-0 121 493

**Die Akte enthält technische Angaben, die nach dem Eingang der Anmeldung eingereicht wurden und die nicht in dieser Patentschrift enthalten sind.**

(73) Patentinhaber: **Gebr. Friedrich GmbH & Co. Bauservice KG, Seesenerstrasse 137, D- 3320 Salzgitter 41 (DE)**

(72) Erfinder: **Nille, Bernd, Dr., Salzdahlumer Strasse 128 d, D-3340 Wolfenbüttel (DE)**

(74) Vertreter: **Paul, Dieter- Alfred, Dipl.- Ing., Fichtestrasse 18, D-4040 Neuss 1 (DE)**

**Beschreibung**

Die Erfindung betrifft ein Bodenaktivierungsmittel für Extremböden, beispielsweise Böden mit sehr geringer oder keiner organischer Substanz und/oder hohen Salz- und/oder Schwermetallgehalten. Die Erfindung betrifft des weiteren die jeweilige Verwendung dieses Bodenaktivierungsmittels für verschiedene Bodenarten.

Die intensive Mechanisierung der letzten Jahrzehnte in den modernen Industriestaaten führte in zunehmendem Maße auch zu Problemen sowohl im Landschaftsbau als auch im Bereich größerer Erdaufschlüsse, wie sie Kies- und Sandgruben, aber insbesondere Braunkohlentagebaue und Eisenbahnbauten darstellen. So entstanden Böschungen, Dämme, Abraumhalden und Kippen, die infolge ihrer Exposition zu Rutschungen, Erosionen und Staubentwicklungen neigen.

Damit diese Flächen gegen weitere Wasser- und Winderosionen geschützt und auch optisch verbessert werden, versucht man, sie zu rekultivieren, d. h. zu begrünen. In vielen Fällen haben aber solche Böden nicht die für eine Rekultivierung erforderlichen Eigenschaften. Je nach Art und Herkunft des Bodens mangelt es an Humus, Nährstoffen usw. Noch schwieriger sind die Verhältnisse, wenn der Boden wachstumshemmende oder -hindernde Schadstoffe enthält und/oder extreme pH-Werte aufweist. Letztere Eigenschaften weisen vor allem Schlacken- und Ascheböden auf.

Um dennoch eine Begrünung zu ermöglichen, werden solche Flächen häufig mit einer hochwertigen Humus-Bodenschicht abgedeckt. Der Abbau, Transport und das Aufbringen solcher Bodenschichten ist jedoch außerordentlich aufwendig, zumal in den meisten Fällen zusätzlich Maßnahmen, insbesondere Stabilisierungsmaßnahmen zumindest in der Anfangsphase erforderlich sind. An steilen Böschungen oder Hängen ist das Aufbringen und Befestigen solcher Schichten zudem nicht möglich.

Davon abgesehen sprechen auch ökologische Gesichtspunkte gegen ein solches Verbringen hochwertigen Bodens, denn angesichts der hierfür erforderlichen, weiter zunehmenden Mengen kann der Bedarf nicht mehr allein aus Landverbrauch infolge Baumaßnahmen gedeckt werden. Der Humusboden müßte also dort hergenommen werden, wo er selbst für Bepflanzung gebraucht wird.

Schon früh sind deshalb eine Vielzahl von Dünge- und Bodenverbesserungsmittel entwickelt worden, mit denen man versucht hat, den vorgenannten Problemböden Stoffe zuzuführen, die die Saatkeimung und das Pflanzenwachstum sowie die hierfür erforderliche Kumusbildung unterstützen und der Wirkung eventueller Schadstoffe begegnen. Die dabei erreichten Ergebnisse waren allerdings nur dort befriedigend, wo für das jeweilige Mittel relativ günstige Voraussetzungen vorlagen. Schwierigkeiten bereiten immer noch solche Böden, bei denen sich die Probleme kumulieren, beispielsweise die praktisch keine organische Substanz enthalten, schadstoffbelastet sind oder extreme PH-Werte aufweisen. Es handelt sich hierbei nicht nur - wie oben erwähnt - um Asche- und Schlackenboden. In jüngerer Zeit hat man nämlich auch festgestellt, daß der Boden in vom Waldsterben betroffenen Gebieten stark mit Schwermetallen und Salzen verseucht ist und zudem pH-Werte aufweist, die in der Regel weit unterhalb der für das Wachstum der jeweiligen Baumart erforderlichen Werte liegen.

Aus der Vielzahl der bekannten Bodenaktivierungsmittel seien die nachfolgend beschriebenen herausgegriffen.

Schon seit einigen Jahren ist ein Düngemittel bekannt, das hauptsächlich eine Biomasse des Mycelpilzes Penicillium chrysogenum enthält. Diese Biomasse fällt als Abfallprodukt bei der Herstellung von Penicillin an. Sie fördert die Keimung und das Wachstum der Pflanzen und unterstützt deshalb eine Kultivierung auch dort, wo der Boden kaum oder gar keine organische Substanz enthält.

Allerdings reicht dieses Mittel unter schwierigen erosiven Bedingungen nicht aus, um eine für die Saatkeimung genügende Bodenstabilisierung zu erreichen. In der EP-A-0 121 493 wird deshalb vorgeschlagen, die Mycelpilz-Biomasse mit einem schon länger bekannten Bodenfestiger auf Polybutadienbasis zu kombinieren. Die Ergebnisse sind jetzt auch dort befriedigend, wo ein an organischer Masse armer Boden hohen Erosionseinflüssen ausgesetzt ist. Das Mittel versagt jedoch dort, wo weitere Probleme hinzukommen, wie dies bei Asche- und Schlackenboden sowie bei schadstoffverseuchtem Waldboden der Fall ist. Offenbar verhindern die Salze und Schwermetalle die ansonsten gegebene Wirkung der Biomasse, so daß keine Bodenverbesserung eintritt. Vielmehr stirbt die Biomasse ab, so daß eine Rekultivierung solcher Böden mit geringer oder keiner organischer Substanz mit diesem Mittel nicht durchführbar ist.

Ein anderes Bodenaktivierungsmittel ist in der DE-OS-3 115 016 beschrieben. Es zeichnet sich durch ein Stoffsystem Stickstoffbase, insbesondere Harnstoff-Zuckerart-Phosphorsäure aus. Nach den Angaben in dieser Schrift soll dieses Mittel ertragssteigernd auch bei schadstoffhaltigen Böden wirken, also deren Giftwirkung vermindern.

Auch mit diesem Mittel waren die Ergebnisse auf extremen Böden nicht besonders eindrucksvoll. Bei Böden mit geringem Gehalt an organischer Masse müssen relativ hohe Mengen dieses Mittels eingesetzt werden, um eine halbwegs befriedigende Begrünung zu erreichen. Dies verursacht hohe Kosten. Außerdem ist die Stabilisierung der mit diesem Mittel behandelten Böden verbesserungsbedürftig.

Der Erfindung liegt demnach die Aufgabe zugrunde, ein Mittel zu finden, das eine besonders schnelle und dichte Begrünung von Extrembböden, insbesondere solchen mit sehr geringer oder keiner organischen Masse und zusätzlichem Schadstoffgehalt, ermöglicht.

Diese Aufgabe wird erfindungsgemäß durch die Kombination der vorbeschriebenen Biomasse des Mycelpilzes mit dem ebenfalls vorbeschriebenen Stoffsystem Stickstoffbase-Zuckerart-Phosphorsäure gelöst.

Erste Versuche mit dieser Mittelkombination haben schon deutlich gezeigt, daß selbst auf sterilem und gleichzeitig schadstoffkontaminiertem Boden nach wenigen Tagen Pflanzenwuchs aus der Saat feststellbar war, der sich dann auch in einem bisher nicht gekannten Maße - bezogen auf diese Bodenart und im Vergleich zu den vorbekannten Mitteln - entwickelte. Dabei überraschte vor allem die Schnelligkeit des Wachstums und die überproportionale Wurzelproduktion, wodurch als zusätzlicher Effekt schon nach kurzer Zeit eine wirksame Bodenstabilisierung erzielt wurde. Die erfindungsgemäße Mittelkombination ist also besonders zur Begrünung von steilen Hängen und Böschungen geeignet. In gegen Wind- und Wassererosion geschützteren Lagen, insbesondere auf ebenen, nicht losen Böden, kann auf die Zugabe eines Bodenstabilisators verzichtet werden. Im übrigen ist er nur in einem solchen Maße erforderlich, daß anfangs die Saat nicht verlagert wird. Keimung und Wurzelbildung sorgen dann in kurzer Zeit für eine ausreichende Stabilisierung, die keiner weiteren Hilfe bedarf.

Die Kombination dieser an sich bekannten Mittel kann angesichts der erreichten Wirkungen nur als ein glücklicher Griff bei der Auswahl aus der Vielzahl schon vorhandener Dünge- und Bodenaktivierungsmittel angesehen werden. Jedenfalls haben zahlreiche Versuche mit anderen Mitteln nicht annähernd ein Pflanzenwachstum auf vergleichbaren Böden ergeben, wie dies mit der erfindungsgemäßen Mittelkombination erreicht wird. Die bei den Mittel ergänzen sich in synergistischer Weise, wobei ein Pflanzen- und Wurzelwachstum erreicht wird, das sich aus der reinen Addition der beiden Mittel nicht erklären läßt. Selbst in Böden ohne jede organische Substanz tritt offenbar eine intensive Biomassenproduktion auf, die äusserst schnell eine Grundlage für die Saatkeimung und das Pflanzenwachstum bilden. Dabei war auf Grund der bisher negativen Erfahrungen mit dem Einsatz der Mycelpilz-Biomasse in schadstoffbelasteten Böden nicht zu erwarten, daß die von den Schadstoffen ausgehende Wirkung auf die Biomasse bei Einsatz innerhalb der erfindungsgemäßen Mittelkombination nunmehr offenbar völlig ausbleibt, die wachstumsfördernde Wirkung der Biomasse sogar erheblich verstärkt wird. Insofern ist dieses Mittel nicht nur für problematische Böden interessant, sondern wirkt wachstumsfördernd, insbesondere wachstumsbeschleunigend auch in Böden, deren Begrünung keine großen Schwierigkeiten bereitet. Dies ist insbesondere dort von Wert, wo es auf eine besonders schnelle Herstellung von Rasenbböden oder Stabilisierung von Hängen und Böschungen ankommt.

Ein weiteres Anwendungsgebiet für die erfindungsgemäße Mittelkombination ist der Waldboden in vom Waldsterben bedrohten Wäldern. Durch Salz- und Schwermetallkontaminierung - in den meisten Fällen noch kombiniert durch extrem niedrigen pH-Wert - ist dort das Baumwachstum praktisch vollständig zum Stillstand gekommen. Mit Hilfe der erfindungsgemäßen Mittelkombination kann die Schadstoffwirkung auf das Baumwachstum eingegrenzt oder sogar eliminiert werden. Zusätzlich wird die Bildung von Mykorrhizenpilzen und das Boden leben derart angeregt, daß im Ergebnis wieder ein für das Baumwachstum optimaler Boden zur Verfügung steht. Soweit der pH-Wert dieses Bodens erheblich von dem für die jeweilige Baumart günstigen Wert abweicht, kann dem durch Zugabe bekannter pH-Wert-verschiebender Mittel Rechnung getragen werden.

Sofern die Zugabe eines Bodenstabilisators erforderlich erscheint, sollte einer auf Polymerbasis, insbesondere des Polybutadien, gewählt werden.

Was die Mycelpilz-Biomasse angeht, so sollte ihr schwefelsaures Kali-Magnesium beigemischt sein. Zweckmäßigerweise besteht die Biomasse mindestens zu 70 % aus organischer Substanz.

Für die Zusammensetzung des Stoffsystems Stickstoffbase-Zuckerart-Phosphorsäure hat sich ein Verhältnis von etwa 40 : 20 : 40 als besonders wirksam erwiesen.

Günstig ist des weiteren, wenn der Mittelkombination zusätzlich Silikate und/oder Kieselsäure beigegeben werden.

Das Verhältnis der Biomasse zum Stoffsystem sollte zwischen 2,5 : 1 bis 1 : 1 liegen, wobei der Biomassenanteil tendenziell hoch sein sollte, wenn Böden ohne jede organische Substanz und/oder mit extrem niedrigen Nährstoffgehalten vorliegen, während ein hoher Anteil des Stoffsystems vor allem bei schadstoffbelasteten Böden und/oder bei Böden mit extrem hohen oder niedrigen pH-Werten anzustreben ist.

Zweckmäßigerweise liegen die einzelnen Komponenten der Mittelkombination in versprühbarer Form vor, da sich das Produkt dann sehr einfach über große Flächen verteilen läßt. Selbstverständlich können einzelne oder alle Bestandteile auch beispielsweise in granulierter Form verteilt werden, so daß unter Umständen erst im Boden die erfindungsgemäße Mittelkombination entsteht. Wichtig ist nur, daß die Verteilung dann im wesentlichen Zeitgleich erfolgt.

Zur Unterstützung der Humusbildung sollte zusätzlich noch ein Gehalt an Torf, vorzugsweise in flüssiger Form, zugegeben werden.

Je nach Art des Bodens, auf dem das erfindungsgemäße Bodenaktivierungsmittel eingesetzt werden soll, kommen folgende Einsatzmengen in Frage. Für sterile sandige Böden empfehlen sich die nachstehenden Mengen:

| Biomasse | 150 bis 250 g/m² |
|---|---|
| Stoffsystem | 100 bis 140 g/m² |
| Bodenstabilisator | 10 bis 30 g/m² |

Bei Ascheböden sollten die Mengen wie folgt verteilt werden:

| Biomasse | ca. 200 bis 300 g/m² |
|---|---|
| Stoffsystem | ca. 140 bis 180 g/m² |

Schlackenböden mit hohen Gehalten an Schwermetallen sollten wie folgt behandelt werden:

| Biomasse | ca. 150 bis 250 g/m² |
|---|---|
| Stoffsystem | ca. 140 bis 180 g/m² |

Bei Böden mit extrem niedrigem pH-Wert kommt folgende Zusammensetzung in Frage:

| Biomasse | ca. 200 bis 300 g/m² |
|---|---|
| Stoffsystem | 100 bis 180 g/m² |
| CaCo₃ | bis 50 t/ha |

Bei erosiven Bedingungen empfiehlt sich jeweils noch eine Zugabe von 20 g/m² Bodenstabilisator. Sofern die Grassamen sofort mit versprengt werden sollen, sollten ca. 10 bis 30 g/m² Grassamen der Flüssigkeit zugegeben werden. Darüber hinaus empfiehlt sich die Zugabe von 200 g/m² Torf bei allen vorgenannten Bodenarten.

**Patentansprüche**

1. Bodenaktivierungsmittel für Extremböden, beispielsweise Böden mit sehr geringer oder keiner organischer Substanz und/oder hohen Salz- und/oder Schwermetallgehalten, gekennzeichnet durch die Kombination einer Biomasse des Mycelpilzes mit dem Stoffsystem Stickstoffbase-Zuckerart-Phosphorsäure.

2. Bodenaktivierungsmittel nach Anspruch 1, gekennzeichnet durch die Zugabe eines Bodenstabilisators auf Polymerbasis.

3. Bodenaktivierungsmittel nach Anspruch 2, dadurch gekennzeichnet, daß der Bodenstabilisator ein Polybutadien ist.

4. Bodenaktivierungsmittel nach einem der Ansprüche 1 bis 3, dadurch gekennzeichnet, daß der Biomasse schwefelsaures Kali-Magnesium beigemischt ist.

5. Bodenaktivierungsmittel nach einem der Ansprüche 1 bis 4, dadurch gekennzeichnet, daß die organische Substanz in der Biomasse mindestens 70 % beträgt.

6. Bodenaktivierungsmittel nach einem der Ansprüche 1 bis 5, dadurch gekennzeichnet, daß das Stoffsystem Stickstoffbase-Zuckerart-Phosphorsäure sich im Verhältnis etwa 40 : 20 : 40 zusammensetzt.

7. Bodenaktivierungsmittel nach einem der Ansprüche 1 bis 6, dadurch gekennzeichnet, daß zusätzlich Silikate und/oder Kieselsäure zugemischt sind.

8. Bodenaktivierungsmittel nach einem der Ansprüche 1 bis 7, dadurch gekennzeichnet, daß das Verhältnis der Biomasse zum Stoffsystem zwischen 2,5 : 1 bis 1 : 1 liegt.

9. Bodenaktivierungsmittel nach einem der Ansprüche 1 bis 8, dadurch gekennzeichnet, daß die einzelnen Komponenten in versprühbarer Form vorliegen.

10. Bodenaktivierungsmittel nach einem der Ansprüche 1 bis 9, gekennzeichnet durch einen zusätzlichen Gehalt an Torf, vorzugsweise in flüssiger Form.

11. Verwendung des Bodenaktivierungsmittels nach einem der Ansprüche 1 bis 10 für sterile sandige Böden in folgenden Mengen:

| Biomasse | 150 bis 250 g/m² |
|---|---|
| Stoffsystem | 100 bis 140 g/m² |
| Bodenstabilisator | 10 bis 30 g/m² |

12. Verwendung des Bodenaktivierungsmittels nach einem der Ansprüche 1 bis 10 für Ascheböden mit hohen Schadstoffgehalten in folgenden Mengen:

| Biomasse | ca. 200 bis 300 g/m² |
|---|---|
| Stoffsystem | ca. 140 bis 180 g/m² |

13. Verwendung des Bodenaktivierungsmittels nach einem der Ansprüche 1 bis 10 für Schlackenböden mit hohen Schadstoffgehalten in folgenden Mengen:

| Biomasse | ca. 150 bis 250 g/m² |
|---|---|
| Stoffsystem | ca. 140 bis 180 g/m² |

14. Verwendung des Bodenaktivierungsmittels nach einem der Ansprüche 1 bis 10 für Böden mit extrem niedrigem pH-Wert in folgenden Mengen:

| Biomasse | ca. 200 bis 300 g/m² |
|---|---|
| Stoffsystem | ca. 100 bis 180 g/m² |
| Kalk | bis 50 t/ha |

15. Verwendung des Bodenaktivierungsmittels nach einem der Ansprüche 12 bis 14, dadurch gekennzeichnet, daß zusätzlich 20 g/m² Bodenstabilisator verteilt werden.

16. Verwendung nach einem der Ansprüche 11 bis 15, dadurch gekennzeichnet, daß zusätzlich ca. 200 g/m² Torf verteilt werden.

17. Verwendung nach einem der Ansprüche 11 bis 16, dadurch gekennzeichnet, daß zusätzlich 10 bis 30 g/m² Grassamen verteilt werden.

**Claims**

1. Soil activation agent for extreme soils, for example soils with very little or no organic matter and/or high contents of salt and/or heavy-metals, characterized by the combination of a mycelial fungal biomass with the system consisting of nitrogenous base - sugars - phosphoric acid.

2. Soil activation agent according to claim 1, characterized by the addition of a polymer-based soil stabilizer.

3. Soil activation agent according to claim 2, characterized in that the soil stabilizer is a polybutadiene.

4. Soil activation agent according to one of Claims 1 to 3, characterized in that potassium magnesium sulphate is added to the biomass.

5. Soil activation agent according to one of Claims 1 to 4, characterized in that the organic matter in the biomass amounts to at least 70 %.

6. Soil activation agent according to one of Claims 1 to 5, characterized in that the components of the system consisting of nitrogenous base - sugars - phosphoric acid are present in a ratio of approximately 40 : 20 : 40.

7. Soil activation agent according to one of Claims 1 to 6, characterized in that silicates and/or silicic acid are also added.

8. Soil activation agent according to one of Claims 1 to 7, characterized in that the ratio of the biomass to the system lies between 2.5 : 1 and 1 : 1.

9. Soil activation agent according to one of Claims 1 to 8, characterized in that the individual components are present in a sprayable form.

10. Soil activation agent according to one of Claims 1 to 9, characterized by an additional content of peat, preferably in liquid form.

11. Use of the soil activation agent according to one of claims 1 to 10 for sterile sandy soils in the following quantities:

| | |
|---|---|
| Biomass | 150 to 250 g/m² |
| System | 100 to 140 g/m² |
| Soil stabilizer | 10 to 30 g/m² |

12. Use of the soil activation agent according to one of claims 1 to 10 for ashy soils with high contents of harmful materials in the following quantities:

| | |
|---|---|
| Biomass | approx. 200 to 300 g/m² |
| System | approx. 140 to 180 g/m² |

13. Use of the soil activation agent according to one of claims 1 to 10 for slaggy soils with high contents of harmful materials in the following quantities:

| | |
|---|---|
| Biomass | approx. 150 to 250 g/m² |
| System | approx. 140 to 180 g/m² |

14. Use of the soil activation agent according to one of claims 1 to 10 for soils with extremely low pH values in the following quantities:

| | |
|---|---|
| Biomass | approx. 200 to 300 g/m² |
| System | approx. 100 to 180 g/m² |
| Lime | up to 50 t/hectare |

15. Use of the soil activation agent according to one of claims 12 to 14, characterized in that 20 g/m² soil stabilizer is also added.

16. Use according to one of claims 11 to 15, characterized in that approximately 200 g/m² peat is also added.

17. Use according to one of claims 11 to 16, characterized in that 10 to 30 g/m² grass seed is also added.

**Revendications**

1. Agent d'activation du sol, pour des sols se trouvant à l'extrême limite de pouvoir être cultivés, par exemple des sols ayant très peu ou pas du tout de substance organique et/ou de grandes teneurs en sel et/ou en métal lourd, caractérisé par l'association d'une biomasse de mycélium de fungus et du système base azotée-sucre-acide phosphorique.

2. Agent d'activation suivant la revendication 1, caractérisé par l'addition d'un stabilisant du sol à base de polymère.

3. Agent d'activation du sol suivant la revendication 2, caractérisé en ce que le stabilisant du sol est un polybutadiène.

4. Agent d'activation du sol suivant l'une des revendications 1 à 3, caractérisé en ce que du potassium-magnésium sulfurique est ajouté à la biomasse.

5. Agent d'activation du sol suivant l'une des revendications 1 à 4, caractérisé en ce la substance organique représente au moins 70 % de la biomasse.

6. Agent d'activation du sol suivant l'une des revendications 1 à 5, caractérisé en ce que le système base azotée-sucre-acide phosphorique est présent dans le rapport 40 : 20 : 40 environ.

7. Agent d'activation du sol suivant l'une des revendications 1 à 6, caractérisé en ce qu'il contient, en outre, des silicates et/ou de l'acide silicique.

8. Agent d'activation du sol suivant l'une des revendications 1 à 7, caractérisé en ce que le rapport de la biomasse au système est compris entre 2,5 : 1 et 1 : 1.

9. Agent d'activation du sol suivant l'une des revendications 1 à 8, caractérisé en ce que les constituants individuels se présentent sous une forme pulvérisable.

10. Agent d'activation du sol suivant l'une des revendications 1 à 9, caractérisé par une teneur supplémentaire en tourbe, de préférence sous forme liquide.

11. Utilisation de l'agent d'activation du sol suivant l'une des revendications 1 à 10, pour des sols sablonneux stériles, en les quantités suivantes:

| | |
|---|---|
| Biomasse | 150 à 250 g/m² |
| Système | 100 à 140 g/m² |
| Stabilisant du sol | 10 à 30 g/m² |

12. Utilisation de l'activation du sol suivant l'une des revendications 1 à 10, pour des sols constitués de cendres et à forte teneur en substance nocive, en les quantités suivantes:

| Biomasse | 200 à 300 g/m² environ |
| Système | 140 à 180 g/m² environ |

13. Utilisation de l'agent d'activation du sol suivant l'une des revendications 1 à 10, pour des sols constitués de scorie et à forte teneur en substance nocive en les quantités suivantes:

| Biomasse | 150 à 250 g/m² environ |
| Système | 140 à 180 g/m² environ |

14. Utilisation de l'agent d'activation du sol suivant l'une des revendications 1 à 10, pour des sols ayant une valeur de pH extrêmement basse, en les quantités suivantes:

| Biomasse | 200 à 300 g/m² environ |
| Système | 100 à 180 g/m² environ |
| Chaux | jusqu'à 50 t/ha |

15. Utilisation de l'agent d'activation du sol suivant l'une des revendications 12 à 14, caractérisé en ce qu'il consiste a répandre, en outre, 20 g de stabilisant du sol au m².

16. Utilisation de l'agent d'activation du sol suivant l'une des revendications 11 à 15, caractérisé en ce qu'il consiste à répandre, en outre, 200 g de tourbe environ au m².

17. Utilisation de l'agent d'activation du sol suivant l'une des revendications 11 à 16, caractérisé en ce qu'il consiste à répandre, en outre, de 10 à 30 g de semence de graminée au m².